# EUROPÄISCHE PATENTSCHRIFT

(11) **EP 0 874 511 B1**
(45) Veröffentlichungstag und Bekanntmachung des Hinweises auf die Patenterteilung: **09.08.2006**
(21) Anmeldenummer: 98106884.4
(22) Anmeldetag: 16.04.1998
(51) Int. Cl.: H04M 9/02

(54) **Türsprechanlage mit mehreren Bustelefonen, einer Türstation und einem Netzgerät zur Stromversorgung derselben**
Intercom apparatus with a plurality of bus-telephones, a door station and related mains power supply
Dispositif d'interphone avec une pluralité d'appareils téléphoniques sur bus, interphone de porte et bloc d'alimentation secteur

(30) Priorität: 21.04.1997 DE 19716599
(43) Veröffentlichungstag der Anmeldung: 28.10.1998
(73) Patentinhaber: Ritto - Werk Loh GmbH & Co. KG, D-35708 Haiger (DE)
(72) Erfinder: Achenbach, Heinz, 35236 Breidenbach (DE); Braun, Wilfried, 6344 Dietzhölztal-Ewersbach (DE); Heinbach, Hartmut, 57080 Siegen (DE); Heppner, Manfred, 35708 Haiger (DE)
(74) Vertreter: Fleck, Hermann-Joseph

(56) Entgegenhaltungen:
- EP-A- 0 709 998
- DE-A- 19 548 744
- FR-A- 2 644 024

## Beschreibung

Die Erfindung betrifft eine Türsprechanlage mit mehreren Bustelefonen, einer Türstation und einem Netzgerät zur Stromversorgung derselben, wobei die Bustelefone und die Türstation an mindestens einer Zweidraht-Busleitung angeschaltet sind, über die diese mit einer BUS-Gleichspannung gespeist sind und über die die zum Aufbau einer Verbindung zwischen der Türstation und einem mittels Ruftaste auswählbaren Bustelefon erforderlichen Betriebssignale übertragbar sind sowie eine Sprechverbindung herstellbar ist.

Eine derartige Signal- und Gegensprechanlage ist aus DE 195 48 744 A bekannt.

Bei einer Türsprechanlage dieser Art bereitet die Stromversorgung der Bustelefone und der Türstation insbesondere bei einer Anlage mit langen Leitungen und einer Vielzahl von Bustelefonen erhebliche Schwierigkeiten. Diese Schwierigkeiten nehmen dann noch zu, wenn die Betriebssignale zum Aufbau der Verbindungen mit Änderungen der Bus-Gleichspannung, z.B. im Impulswählverfahren durch Unterbrechen der Stromversorgung oder durch Spannungserhöhungen bzw. Spannungsreduzierungen, gebildet werden.

Es ist Aufgabe der Erfindung, eine Türsprechanlage der eingangs erwähnten Art zu schaffen, bei dem die Gleichspannungsversorgung der Bustelefone und der Türstation von einem zentralen Netzgerät aus in einfacher Weise auch für den Verbindungsaufbau nach einer wechselstrommäßigen Wahl des gewünschten Bustelefons verwendet werden kann.

Diese Aufgabe wird nach der Erfindung dadurch gelöst, daß den Bustelefonen über die Zweidraht-Busleitungen die Bus-Gleichspannung über Gleichspannungsabkoppelschaltungen des Netzgerätes zuführbar ist, die wechselstrommäßig hochohmig ausgebildet sind, daß die Bustelefone über eine Gleichrichter-Brückenschaltung als Verpolungsschutz polungsunabhängig an die Zweidraht-Busleitungen angeschaltet sind, die wechselstrommäßig niederohmig ausgebildet ist, daß die Türstation in einen Türsprechmodul und einen Tastenmodul unterteilt ist, daß der Türsprechmodul über eine Türstations-Busleitung mit dem Netzgerät verbunden ist, daß das Netzgerät dazu geeignet ist, über eine getrennte Gleichspannungsabkoppelschaltung und einen Polaritätsumschalter die BUS-Gleichspannung in der Ausgangsstellung der Anlage in der einen Polarität und nach dem Empfang eines Meldesignals von einem gerufenen Bustelefon in der anderen Polarität der Türstations-Busleitung zuzuführen, daß der Türsprechmodul über eine Polaritätsauswerteschaltung und eine Gleichrichter-Brückenschaltung an die Zweidraht-Busleitung angeschaltet sind, daß die Polaritätsauswerteschaltung dazu geeignet ist, nur beim Auftreten der dem Empfang eines Meldesignals zugeordneten Polarität den Sprech- und Hörkreis des Türsprechmoduls mit der Zweidraht-Busleitung zu verbinden, daß die für die Übertragung der Betriebssignale erforderlichen Sende-Empfangseinrichtungen und die Sprech- und Hörkreise von Türsprechmodul und den Bustelefonen nur wechselstrommäßig mit den Zweidraht-Busleitungen und der Türstations-Busleitung verbunden sind, und daß die Anlage dazu geeignet ist, die Betriebssignale und die Sprachsignale im Sprachfrequenzbereich zu bilden und zu übertragen .

Die Anlage kann mehrere Zweidraht-Busleitungen umfassen, die über die Gleichspannungskoppelschaltungen gleichstrommäßig gegeneinander entkoppelt sind, wechselstormmäßig aber miteinander verbunden werden können. Durch die Ankopplung der Bustelefone über einen Verpolungsschutz wird eine einfach erweiterbare Anlage geschaffen, da die Polung beim Anschluß nicht beachtet werden muß. Die Einrichtungen des Bustelefons erhalten in jedem Fall die richtige Polarität der Gleichspannung. Da die Gleichspannung für das Türsprechmodul in der Polarität umgeschaltet werden kann, ergibt sich eine einfache Möglichkeit, den Sprech- und Hörkreis des Türsprechmoduls vom Netzgerät aus an- und abzuschalten. Die Signalisierung, d.h. die Übertragung der Betriebssignale und der Sprachsignale, erfolgt im Sprachfrequenzbereich, so daß die dafür erforderlichen Einrichtungen in den Bustelefonen, dem Netzgerät und dem Türsprechmodul mit dem Tastenmodul nur wechselstrommäßig mit den Zweidraht-Busleitungen und der Türstations-Busleitung gekoppelt werden müssen. Es ist dabei nur darauf zu achten, daß die Gleichspannungsabkoppelschaltungen wechselstrommäßig hochohmig und die Gleichrichter-Brückenschaltungen als Verpolschutz wechselstrommäßig niederohmig ausgebildet sind.

Die Gleichspannungsversorgung der Türsprechanlage ist dabei so vervollständigt, daß die Gleichspannungsabkoppelschaltungen der Zweidraht-Busleitungen und der Türstations-Busleitung von einem Spannungsregler gespeist sind, der selbst von einem Netztransformator mit nachgeschaltetem AC/DC-Wandler gespeist ist.

Eine Weiterbildung der Türsprechanlage sieht vor, daß zwischen dem Netzgerät und dem Türsprechmodul eine weitere Türstations-Busleitung geführt ist, auf der eine zum Betrieb einer Beleuchtungseinrichtung im Tastenmodul erforderliche Wechselspannung übertragen wird. Diese Wechselspannung wird im Netzgerät sowieso abgeleitet und zum Steuern des Türöffners verwendet.

Für den Ruf an dem Bustelefon ist nach einer Ausgestaltung vorgesehen, daß die Rufsignale in dem Tastenmodul mittels Ruftasten einleitbar und von einem Mikrocomputer gebildet und ausgesendet werden und daß in dem gerufenen Bustelefon über einen Mikrocomputer das Rufsignal ausgewertet und zur Abgabe eines akustischen Rufes über einen Rufverstärker und einen Ruflautsprecher verwendet wird.

Dieser Rufverstärker und Ruflautsprecher der Türsprechanlage läßt sich dadurch als Ruforgan für die Etagen-Klingeltaste verwenden, daß der Mikrocomputer der Bustelefone über eine Etagen-Klingeltaste zur Abgabe des akustischen Rufes direkt ansteuerbar ist und daß der akustische Ruf bei dieser Ansteuerung als Dauerruf gegeben wird.

Die Erfindung wird anhand eines in den Zeichnungen dargestellten Ausführungsbeispiels näher erläutert. Es zeigen:
- Fig. 1: im Blockschaltbild ein zentrales Netzgerät mit einem angeschalteten Bustelefon und
- Fig. 2: ebenfalls als Blockschaltbild die in ein Türsprechmodul und ein Tastenmodul unterteilte Türstation.

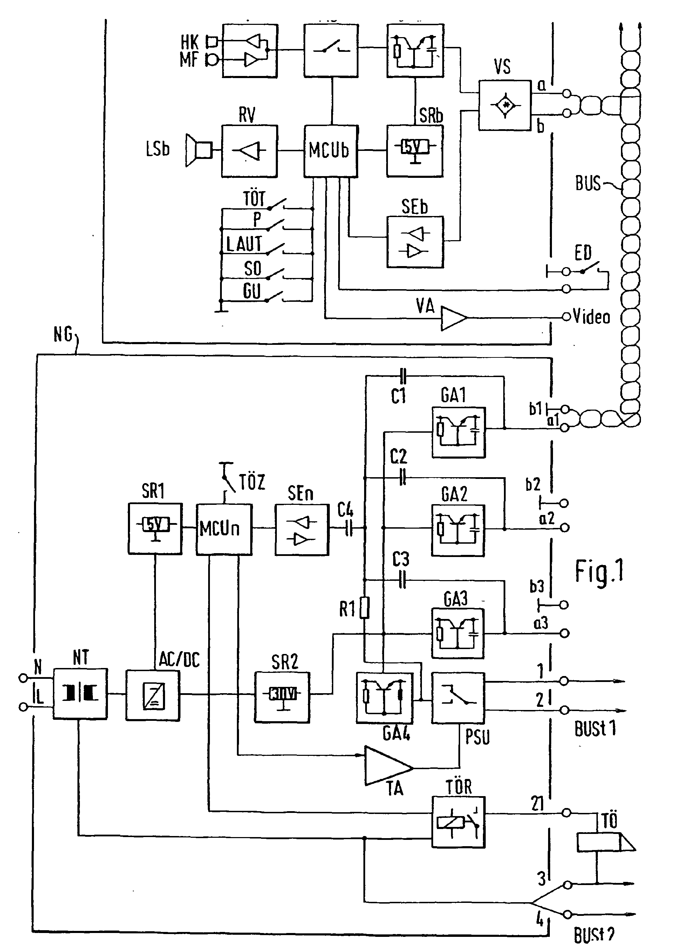

Wie der Fig. 1 zu entnehmen ist, ist im Netzgerät NG ein Netztransformator NT vorgesehen, der sekundärseitig Wechselspannungen von 10V und 30V abgibt. Die Wechselspannung mit 10V dient zur Stromversorgung für einen Türöffner TÖ, wobei die Steuerung desselben ein Türöffnerrelais TÖR übernimmt, das von einem Mikrorechner MRUn des Netzgerätes NG gesteuert wird, wie noch gezeigt wird.

Über eine Türstations-Busleitung BUSt2 wird die Wechselspannung 10V auch zu der Türstation übertragen, in der die Türstations-Busleitung BUSt2 über den Türsprechmodul TSM zu dem Tastenmodul TAM weitergeführt und zur Speisung einer Beleuchtungseinrichtung B verwendet wird. Die Wechselspannung mit 30V wird einem AC/DC-Wandler zugeführt, der einen Spannungsregler SR1 für 5V Gleichspannung und einen Spannungsregler SR2 für 30V Gleichspannung speist. Der Spannungsregler SR1 speist den Mikrocomputer MCUn sowie die Sende-Empfangs-Einrichtung SEn mit z.B. 5V Gleichspannung. Der Spannungsregler SR2 liefert über Gleichspannungsabkoppelschaltungen GA1, GA2 und GA3 eine Bus-Gleichspanung von 30V auf drei Zweidraht-Busleitungen BUS, die an den Klemmen a1,b1; a2,b2 und a3,b3 angeschlossen sind. Diese Gleichspannungsabkoppelschaltungen GA1 bis GA3 entkoppeln die drei Zweidraht-Busleitungen BUS gleichstrommäßig gegeneinander, sind wechselstrommäßig jedoch hochohmig ausgebildet, um die Zweidraht-Busleitungen nicht unnötig zu belasten. Mit der Gleichspannungsabkoppelschaltung GA4 wird die Türstations-Busleitung BUSt1 angeschaltet und mit derselben Gleichspannung von 30V versorgt. Dabei führt die Verbindung über einen Polaritätsumschalter PSU. Die Türstations-Busleitung BUSt1 ist im Türsprechmodul TSM mit einer Polaritätsauswerteschaltung PA abgeschlossen, die einen Schalter S zur An- und Abschaltung des Sprech- und Hörkreises im Türsprechmodul TSM steuert. Dabei ist der Polaritätsauswerteschaltung PA eine Gleichrichter-Brückenschaltung BG nachgeschaltet, die sicherstellt, daß dem Tastenmodul TAM stets Gleichspannung derselben Polarität zugeführt wird, die über den Spannungsregler SRt zur Ableitung der Versorgungsspannung für einen Mikrocomputer MCUt des Tastenmoduls TAM erforderlich ist. Mit der Gleichspannungsabkopplung GAt wird der Sprech- und Hörkreis von der Bus-Gleichspannung abgekoppelt. Der Sprech- und Hörkreis wird also nur bei geschlossenem Schalter S wechselstrommäßig mit der Zweidraht-Busleitung BUS gekoppelt, wobei die Gleichrichter-Brückenschaltung BG und die Polaritätsauswerteschaltung PA möglichst kleine Dämpfung bringen, d.h. wechselstrommäßig niederohmig sind.

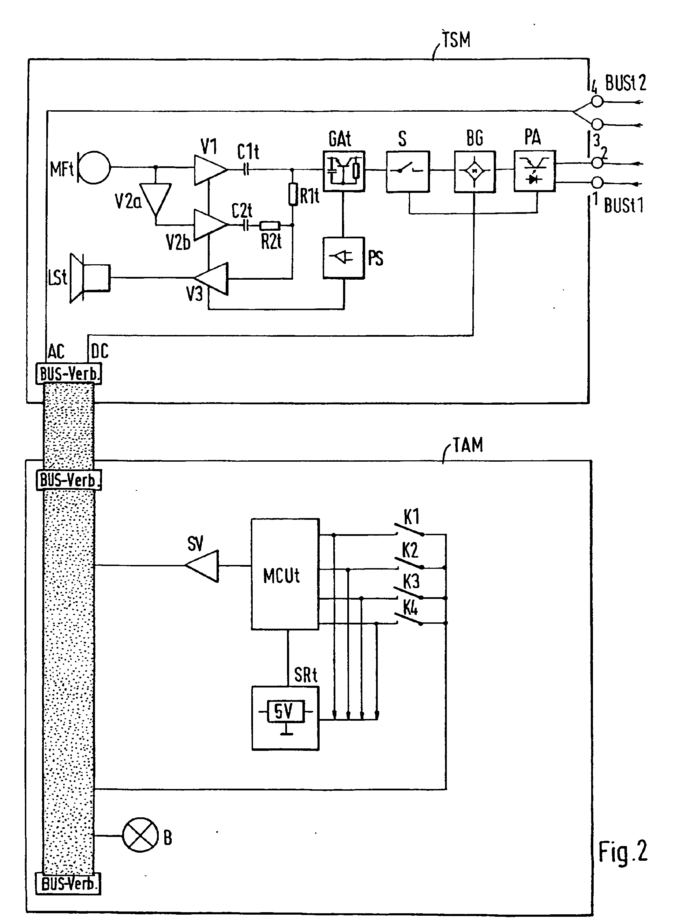

Für den Sprechverkehr ist ein gesteuertes Gegensprechen vorgesehen, wie die Fig. 2 erkennen läßt. Das vom Mikrophon MFt erzeugte Sprachsignal wird über den Verstärker V1 und den Koppelkondensator C1t eingekoppelt. Gleichzeitig wird das Sprachsignal über die Verstärker V2a und Vsb invertiert und über den Koppelkondensator C2t und die Widerstände R1t und R2t bedämpft. Das Sprachsignal gelangt somit nur über die Zweidraht-Busleitung BUSt1 zum gerufenen Bustelefon BT. Vom Bustelefon BT abgegebene Sprachsignale kommen über die Türstations-Busleitung BUSt1 an dem Türsprechmodul TSM an und gelangen über den Widerstand R1t und den Verstärker V3 zum Lautsprecher LSt. In der Pegelsteuerung PS erfolgt die Erkennung der Sprachpegel, ob das Sprachsignal von dem Türsprechmodul TSM oder dem Bustelefon BT kommt. Die Verstärker V1 bis V3 lassen sich über die Pegelsteueurng PS richtungsabhängig aktiv schalten.

Im Tastenmodul TAM sind die Ruftasten K1 bis K4 vorgesehen, die die Versorgungsspannung an den Mikrocomputer MCUt anschalten. In der Ausgangsstellung der Türsprechanlage fließt daher kein Ruhestrom. Mit dem Betätigen einer Ruftaste K1 bis K4 im Mikrocomputer MCUt wird zudem ein individuell zugeordnetes Rufsignal im Sprachfrequenzbereich gebildet, das über den Sendeverstärker SV auf die Türstations-Busleitung BUSt1 gegeben wird. Im Netzgerät NG sind über den Widerstand R1 und die Koppelkondensatoren C1 bis C4 alle Zweidraht-Busleitungen BUS, die Türstations-Busleitung BUSt1 und die Sende-Empfangs-Einrichtung SEn wechselstrommäßig miteinander verbunden, so daß das vom Tastenmodul TAM ausgesandte Rufsignal zu allen Bustelefonen BT aller Zweidraht-Busleitungen BUS gelangt. Nur in dem zugeordneten Bustelefon BT wird über die Sende-Empfangs-Einrichtung SEb und den Mikrocomputer MCUb die Übereinstimmung mit der eingespeicherten Adresse erkannt. Der Mikrocomputer MCUb veranlaßt die Bildung eines Rufsignals, z.B. eines Wechsel-Rufstromes von 440/660 Hz, der über den Rufverstärker RV und den Ruflautsprecher LSb abgestrahlt wird. Meldet sich das gerufene Bustelefon BT durch Abheben des Handapparates mit der Hörkapsel HK und dem Mikrophon MF, dann wird der Gabelumschalter GU betätigt. Der Mikrocomputer MCUb veranlaßt über die Ansteuerung der Mithörsperre MS die Anschaltung des Sprech- und Hörkreises. Gleichzeitig wird ein Meldesignal auf die Zweidraht-Busleitung BUS gegeben, das in dem Netzgerät NG als Kriterium für die Umschaltung des Polaritätsumschalters PSU erkannt wird. Dazu wird über die Sende-Empfangs-Einrichtung SEn das Meldesignal aufgenommen und der Mikrocomputer MCUn zur Ansteuerung des Polaritätsumschalters PSU veranlaßt. Die Ansteuerung erfolgt über einen Türansteuerungstreiber TA.

Wie in Fig. 2 gezeigt wird, wird der Mikrocomputer MCUb der Bustelefone BT auch mit einer Türöffnertaste TÖT, einer Programmiertaste P, einer Sondertaste SO und einer Taste LAUT angesteuert. Mit der Türöffnertaste TÖT wird ein zugeordnetes Betriebssignal zum Mikrocomputer MCUn des Netzgerätes NG übertragen, wobei eine zeitlich begrenzte Ansteuerung des Türöffnerrelais TÖR eingeleitet werden kann, wie mit dem Knotakt TÖZ angedeutet ist. Mit der Programmiertaste P kann der Mikrocomputer MCUb auf die Speicherung einer zugeordneten, über eine bestimmte Ruftaste K1 bis K4 aussendbaren Adresse = Rufsignal eingestellt werden. Mit der Taste LAUT läßt sich die Lautstärke des abgestrahlten Ruftones einstellen. Wird der Mikrocomputer MCUb über die Etagen-Klingeltaset ED angesteuert, dann veranlaßt er die direkte Abgabe des Ruftones als Dauerton. Mit der Sondertaste SO ist angedeutet, daß auch weitere Betriebssignale von den Bustelefonen BT ausgesandt werden können.

Da alle nicht gerufenen Bustelefone BT keine Übereinstimmung des anstehenden Rufsignal mit ihren Adressen feststellen, bleiben die Mithörsperren MS in der gezeigten Ausschaltstellung, so daß diese Bustelefone BT nicht auf die hergestellte Sprechverbindung aufgeschaltet werden kann.

## Patentansprüche

1. Türsprechanlage mit mehreren Bustelefonen, einer Türstation und einem Netzgerät zur Stromversorgung derselben, wobei die Bustelefone und die Türstation an mindestens einer Zweidraht-Busleitung angeschaltet sind, über die diese mit einer BUS-Gleichspannung gespeist sind und über die die zum Aufbau einer Verbindung zwischen der Türstation und einem mittels Ruftaste auswählbaren Bustelefon erforderlichen Betriebssignale übertragbar sind sowie eine Sprechverbindung herstellbar ist,
**dadurch gekennzeichnet,**
**daß** den Bustelefonen (BT) über die Zweidraht-Busleitungen (BUS) die Bus-Gleichspannung (z.B. 30V) über Gleichspannungsabkoppelschaltungen (GA1, GA2, GA3) des Netzgerätes (NG) zuführbar ist, die wechselstrommäßig hochohmig ausgebildet sind,
**daß** die Bustelefone (BT) über eine Gleichrichter-Brückenschaltung als Verpolungsschutz (VS) polungsunabhängig an die Zweidraht-Busleitungen (BUS) angeschaltet sind, die wechselstrommäßig niederohmig ausgebildet ist,
**daß** die Türstation in einen Türsprechmodul (TSM) und einen Tastenmodul (TAM) unterteilt ist,
**daß** der Türsprechmodul (TSM) über eine Türstations-Busleitung (BUSt1) mit dem Netzgerät (NG) verbunden ist,
**daß** das Netzgerät (NG) dazu geeignet ist, über eine getrennte Gleichspannungsabkoppelschaltung (GA4) und einen Polaritätsumschalter (PSU) die BUS-Gleichspannung (z.B. 30V) in der Ausgangsstellung der Anlage in der einen Polarität und nach dem Empfang eines Meldesignals (GU) von einem gerufenen Bustelefon (BT) in der anderen Polarität der Türstations-Busleitung (BUSt1) zuzuführen,
**daß** der Türsprechmodul (TSM) über eine Polaritätsauswerteschaltung (PA) und eine Gleichrichter-Brückenschaltung (BG) an die Zweidraht-Busleitung (BUS) angeschaltet sind,
**daß** die Polaritätsauswerteschaltung (PA) dazu geeignet ist, nur beim Auftreten der dem Empfang eines Meldesignals zugeordneten Polarität den Sprech- und Hörkreis des Türsprechmoduls (TSM) mit der Zweidraht-Busleitung (BUS) zu verbinden,
**daß** die für die Übertragung der Betriebssignale erforderlichen Sende-Empfangseinrichtungen (MCUt, MCUn, MCU6; SV, SEn, SEb) und die Sprech- und Hörkreise (MFt, LSt, MF, HK) von Türsprechmodul (TSM) und den Bustelefonen (BT) nur wechselstrommäßig mit den Zweidraht-Busleitungen (BUS) und der Türstations-Busleitung (BUSt1) verbunden sind, und
**daß** die Anlage dazu geeignet ist, die Betriebssignale und die Sprachsignale im Sprachfrequenzbereich zu bilden und zu übertragen.

2. Türsprechanlage nach Anspruch 1,
**dadurch gekennzeichnet,**
**daß** die Gleichspannungsabkoppelschaltungen (GA1 bis GA4) der Zweidraht-Busleitungen (BUS) und der Türstations-Busleitung (BUSt1) von einem Spannungsregler (SR2) gespeist sind, der selbst von einem Netztransformator (NT) mit nachgeschaltetem AC/DC-Wandler gespeist ist.

3. Türsprechanlage nach Anspruch 1 oder 2,
**dadurch gekennzeichnet,**
**daß** zwischen dem Netzgerät (NG) und dem Türsprechmodul (TSM) eine weitere Türstations-Busleitung (BUSt2) geführt ist, auf der eine zum Betrieb einer Beleuchtungseinrichtung (B) im Tastenmodul (TAM) erforderliche Wechselspannung (z.B. 10V) übertragen wird.

4. Türsprechanlage nach einem der Ansprüche 1 bis 3,
**dadurch gekennzeichnet,**
**daß** die Rufsignale in dem Tastenmodul (TAM) mittels Ruftasten (K1 bis K4) einleitbar und von einem Mikrocomputer (MCUt) gebildet und ausgesendet werden und
**daß** in dem gerufenen Bustelefon (BT) über einen Mikrocomputer (MCUb) das Rufsignal ausgewertet und zur Abgabe eines akustischen Rufes über einen Rufverstärker (RV) uind einen Ruflautsprecher (LSb) verwendet wird.

5. Türsprechanlage nach Anspruch 4,
**dadurch gekennzeichnet,**
**daß** der Mikrocomputer (MCUb) der Bustelefone (BT) über eine Etagen-Klingeltaste (ED) zur Abgabe des akustischen Rufes direkt ansteuerbar ist und
**daß** der akustische Ruf bei dieser Ansteuerung als Dauerruf gegeben wird.

## Claims

1. Door intercom system having a plurality of bus telephones, a door station and a power supply unit for supplying electrical power to it, with the bus telephones and the door station being connected to at least one two-wire bus line, via which they are fed with a BUS DC voltage and via which the operating signals which are required to set up a link between the door station and a bus telephone which can be selected by means of a dialling key can be transmitted and a voice link can be produced,
**characterized**
**in that** the bus telephones (BT) can be supplied via the two-wire bus lines (BUS) with the bus DC voltage (for example 30 V) via DC voltage decoupling circuits (GA1, GA2, GA3) of the power supply unit (NG), which are designed to have a high impedance for alternating current,
**in that** the bus telephones (BT) are connected via a bridge rectifier circuit as polarity-reversal protection (VS), independently of the polarity, to the two-wire bus lines (BUS) which are designed to have a low impedance for alternating current,
**in that** the door station is subdivided into a door intercom module (TSM) and a key module (TAM),
**in that** the door intercom module (TSM) is connected to the power supply unit (NG) via a door station bus line (BUSt1),
**in that** the power supply unit (NG) is suitable for supplying the BUS DC voltage (for example 30 V) via a separate DC voltage decoupling circuit (GA4) and a polarity reversal switch (PSU) in the initial position of the system in the one polarity, and after reception of a message signal (GU) from a called bus telephone (BT) in the other polarity of the door station bus line (BUSt1),
**in that** the door intercom module (TSM) is connected to the two-wire bus line (BUS) via a polarity evaluation circuit (PA) and a bridge rectifier circuit (BG),
**in that** the polarity evaluation circuit (PA) is suitable for connection of the speech and listening circuit of the door intercom module (TSM) to the two-wire bus line (BUS) only on the occurrence of the polarity which is associated with reception of a message signal,
**in that** the transmitting/receiving devices (MCUt, MCUn, MCU6; SV, SEn, SEb), which are required for the transmission of the operating signals, and the speech and listening circuit (MFt, LSt, MF, HK) are connected from the door intercom module (TSM) and the bus telephones (BT) only for alternating current to the two-wire bus lines (BUS) and the door station bus line (BUSt1), and
**in that** the system is suitable for formation and transmission of the operating signals and the speech signals in the speech frequency range.

2. Door intercom system according to Claim 1,
**characterized**
**in that** the DC voltage decoupling circuits (GA1 to GA4) of the two-wire bus lines (BUS) and of the door station bus line (BUSt1) are fed from a voltage regulator (SR2), which is itself fed from a mains transformer (NT) with a downstream AC/DC converter.

3. Door intercom system according to Claim 1 or 2,
**characterized**
**in that** a further door station bus line (BUSt2) is connected between the power supply unit (NG) and the door intercom module (TSM), on which further door station bus line an AC voltage (for example 10 V) which is required for operation of a lighting device (B) in the key module (TAM) is transmitted.

4. Door intercom system according to one of Claims 1 to 3,
**characterized**
**in that** the calling signals can be initiated in the key module (TAM) by means of dialling keys (K1 to K4), and are formed and transmitted by a microcomputer (MCUt), and
**in that** the calling signal is evaluated in the called bus telephone (BT) via a microcomputer (MCUb) and is used to emit an audible call via a call amplifier (RV) and a call loudspeaker (LSb).

5. Door intercom system according to Claim 4
**characterized**
**in that** the microcomputer (MCUb) for the bus telephones (BT) can be driven directly via a floor ringing key (ED) in order to emit the audible call,
and
**in that** the audible call is produced as a continuous call when driven in this way.

## Revendications

1. Dispositif d'interphone de porte avec une pluralité d'appareils téléphoniques sur bus, une station de porte et un bloc d'alimentation secteur pour son alimentation électrique, dans lequel les appareils téléphoniques sur bus et la station de porte sont raccordés à au moins une ligne de bus à deux conducteurs permettant de les alimenter par une tension continue de BUS et permettant d'acheminer les signaux de fonctionnement nécessaires à l'établissement d'une liaison entre la station de porte et un appareil téléphonique sur bus pouvant être sélectionné au moyen d'une touche d'appel, ainsi que l'établissement d'une liaison phonique,
**caractérisé en ce que**
la ligne de bus à deux conducteurs (BUS) permet d'acheminer vers les appareils téléphoniques sur bus (BT), la tension continue de BUS (par exemple 30V) à travers les circuits de découplage de la tension continue (GA1, GA2, GA3) du bloc d'alimentation secteur (NG) qui sont réalisés en haute impédance du point de vue du courant alternatif,
les appareils téléphoniques sur bus (BT) sont raccordés à la ligne de bus à deux conducteurs (BUS) de manière indépendante de la polarité à travers un circuit redresseur en pont assurant la protection contre les erreurs de polarité (VS), qui est réalisé en basse impédance du point de vue du courant alternatif,
la station de porte est subdivisée en un module de liaison phonique de porte (TSM) et un module à touche (TAM),
le module de liaison phonique de porte (TSM) est relié au bloc d'alimentation secteur (NG) par une ligne de bus de station de porte (BUSt1),
le bloc d'alimentation secteur (NG) convient pour acheminer la tension continue de BUS (par exemple 30V), à travers un circuit séparé de découplage de la tension continue (GA4) et un commutateur de polarité (PSU), dans une des polarités en position de sortie du dispositif et dans l'autre polarité de la ligne de bus de station de porte (BUSt1) après réception d'un signal de signalisation (GU) par un appareil téléphonique sur bus (BT) qui est appelé,
le module de liaison phonique de porte (TSM) est connecté à la ligne de bus à deux conducteurs (BUS) à travers un circuit d'exploitation de la polarité (PA) et un circuit redresseur en pont (BG),
le circuit d'exploitation de la polarité (PA) convient pour ne relier le circuit de parole et d'écoute du module de liaison phonique de porte (TSM) à la ligne de bus à deux conducteurs (BUS), que lors de l'apparition de la polarité attribuée à la réception d'un signal de signalisation,
les installations d'émission-réception (MCUt, MCUn, MCU6 ; SV, SEn, SEb) nécessaires pour la transmission des signaux de fonctionnement, et les circuits de parole et d'écoute (MFt, LSt, MF, HK) du module de liaison phonique de porte (TSM) et de l'appareil téléphonique sur bus (BT), ne sont reliés que du point de vue courant alternatif à la ligne de bus à deux conducteurs (BUS) et à la ligne de bus de station de porte (BUSt1), et
l'installation convient pour former et pour transmettre les signaux de fonctionnement et les signaux phoniques dans la plage de fréquences de la parole.

2. Dispositif d'interphone de porte selon la revendication 1,
**caractérisé en ce que** les circuits de découplage de la tension continue (GA1 à GA4) de la ligne de bus à deux conducteurs (BUS) et de la ligne de bus de station de porte (BUSt1) sont alimentés par un régulateur de tension (SR2) qui est lui-même alimenté par un transformateur de secteur (NT) suivi d'un convertisseur de courant alternatif/continu.

3. Dispositif d'interphone de porte selon la revendication 1 ou 2,
**caractérisé en ce qu'**entre le bloc d'alimentation secteur (NG) et le module de liaison phonique de porte (TSM) chemine une autre ligne de bus de station de porte (BUSt2) qui achemine une tension alternative (par exemple 10V) nécessaire au fonctionnement d'une installation d'éclairage (B) dans le module à touche (TAM).

4. Dispositif d'interphone de porte selon une des revendications 1 à 3,
**caractérisé en ce que** les signaux d'appel dans le module à touche (TAM) peuvent être actionnés au moyen des touches d'appel (K1 à K4) et sont formés et émis par un micro-ordinateur (MCUt) et
**en ce que** le signal d'appel est exploité par un micro-ordinateur (MCUb) dans l'appareil téléphonique sur bus (BT) appelé et qu'on utilise un haut-parleur d'appel (LSb) pour émettre un appel acoustique par l'intermédiaire d'un amplificateur d'appel (RV).

5. Dispositif d'interphone de porte selon la revendication 4,
**caractérisé en ce que** le micro-ordinateur (MCUb) de l'appareil téléphonique sur bus (BT) peut être commandé directement au moyen d'une touche de sonnette d'étage (ED) pour émettre l'appel acoustique et
**en ce que** cette commande émet l'appel acoustique sous forme d'appel continu.
